# EUROPEAN PATENT SPECIFICATION

(11) **EP 2 933 957 B1**
(45) Date of publication and mention of the grant of the patent: **26.02.2020**
(21) Application number: 13862920.9
(22) Date of filing: 11.07.2013
(51) Int. Cl.: H04L 12/28, G06F 3/0488, G06F 3/0481

(54) **METHOD AND MOBILE TERMINAL FOR DISPLAYING DLNA EQUIPMENT**
VERFAHREN UND MOBILE ENDVORRICHTUNG ZUM ANZEIGEN VON DLNA-AUSRÜSTUNGEN
PROCÉDÉ ET TERMINAL MOBILE POUR AFFICHAGE D'ÉQUIPEMENT DLNA

(30) Priority: 12.12.2012 CN 201210541126
(43) Date of publication of application: 21.10.2015
(73) Proprietor: Huizhou TCL Mobile Communication Co., Ltd., Huizhou, Guangdong 516006 (CN)
(72) Inventor: CAI, Wendi, Huizhou Guangdong 516006 (CN)
(74) Representative: ZHAOffice SPRL
(86) International application number: PCT/CN2013/079210
(87) International publication number: WO 2014/089965

(56) References cited:
- EP-A1- 1 845 683
- EP-A2- 2 463 763
- CN-A- 101 124 808
- CN-A- 101 202 977
- CN-A- 101 340 212
- CN-A- 102 722 476
- CN-A- 103 023 736
- US-A1- 2002 027 569
- US-A1- 2012 066 630
- US-A1- 2012 159 340

## Description

The DLNA (Digital Living Network Alliance) is a kind of technical solution that allows for interconnection and intercommunication among personal computers, consumer electrical appliances, mobile apparatuses or the like in a wireless network or a wired network so as to achieve the purpose of unlimited sharing of digital media and content services.

Conventionally, before a user uses a mobile phone to access an apparatus in a DLNA network, it needs to perform a series of complex operations. For example, it needs to access a wireless network and search for a connectable DLNA apparatus in the current network, select a target apparatus type in a medium library list that is displayed, then perform subsequent operations after the target apparatus type is selected, and finally select the name of the DLNA apparatus. This makes the user unable to operate the DLNA apparatus conveniently and quickly, thus leading to a poor efficiency.

US 2012/0159340 discloses a mobile terminal and a method of controlling the same. The mobile terminal includes: a display; a radio communication unit for communicating with at least one another electronic device; and a controller for controlling to divide information about at least one another electronic device that communicates through the radio communication unit into a first object corresponding to a first electronic device having a managing attribute of contents and a second object corresponding to a second electronic device having an attribute of rendering the contents and the display to display the first object and the second object.

EP2463763A2 discloses a mobile terminal and controlling method thereof, by which a user interface facilitating a setting of an additional function on an icon can be provided. One embodiment of the present invention includes a display unit, a user input unit configured to receive an input of a command from a user, and a controller generating a first attribute-giving icon corresponding to a first attribute on the display unit in accordance with a first input via the user input unit, the controller, if a distance between the first attribute-giving icon and a second icon displayed on the display unit is changed into a prescribed range in accordance with a second input via the user input unit, controlling the first attribute to be given to the second icon.

US2012066630A1 discloses a mobile terminal. The mobile terminal includes a memory unit, a touch screen configured to display an icon, and a controller configured to control an operation associated with a function corresponding the icon displayed on the touch screen, control the touch screen to display a UI (user interface) for bookmarking icons, detect a bookmark command for the icon displayed on the touch screen, temporarily store, in the memory unit, the icon in response to the bookmark command, and control the touch screen to display the bookmarked icon within the UI.

A primary object of the present disclosure is to provide a method of displaying a DLNA apparatus, and a mobile terminal which are capable of simplifying the operation steps.

The present invention is defined in the appended independent claims to which reference should be made. Advantageous features are set out in the appended dependent claims.

### BRIEF DESCRIPTION OF THE DRAWINGS

FIG. 1 is a schematic flowchart diagram of a method of displaying a DLNA apparatus according to an embodiment of the present disclosure;
FIG. 2 is a schematic view illustrating the specific process flow of the method shown in FIG. 1;
FIG. 3 is a schematic view illustrating the specific process flow of displaying a shortcut icon in the method shown in FIG. 1; and
FIG. 4 is a schematic structural view of a mobile terminal according to an embodiment of the present disclosure.

### DETAILED DESCRIPTION OF THE INVENTION

The present disclosure will be detailed hereinbelow with reference to the attached drawings and the embodiments.

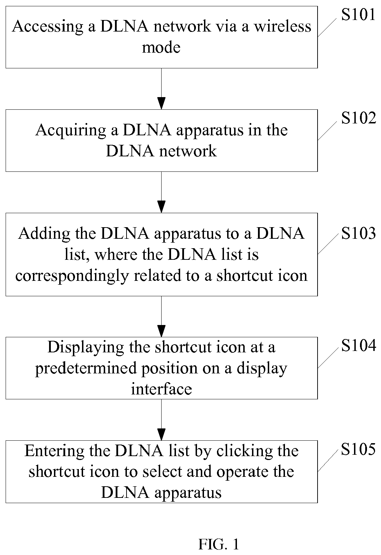

Refer to FIG. 1, which shows a schematic flowchart diagram of a method of displaying a DLNA apparatus according to an embodiment of the present disclosure. The method of displaying a DLNA apparatus comprises the following steps of:
Step S101: accessing a DLNA network via a wireless mode.

The DLNA network, also known as the home network, is a home informatization platform that integrates the home control network with the multimedia information network. The DLNA network can achieve interconnection and management of information apparatuses, communication apparatuses, entertainment apparatuses as well as household electrical appliances in the family range, and is a system in which the data information and the multimedia information can be shared. The DLNA network system forms an intelligent home apparatus system. In this embodiment, the DLNA network is a virtual network based on the 802.11 wireless network or wired network. The DLNA network labels DLNA apparatuses that are connected into the DLNA network, and all DLNA apparatuses that are connected into the network can share resources and interoperate with each other. For example, if an electronic apparatus that sets up the DLNA network is a computer, then by setting the type of the wireless network of the computer to be a "home network", the "home network" will be the DLNA network. When electronic apparatuses that support the DLNA function in the household are connected into the DLNA network and it is ensured that the DLNA function of all electronic apparatuses that are connected into the DLNA network is activated, the electronic apparatuses can detect each other and establish communications therebetween.

Step S102: acquiring a DLNA apparatus in the DLNA network.

The electronic apparatuses that support the DLNA function are called DLNA apparatuses. After being connected into the DLNA network and having activated the DLNA function, the DLNA apparatuses can be detected with each other. By use of one of the DLNA apparatuses, the user can acquire other DLNA apparatuses in the DLNA network to conveniently control and operate the other DLNA apparatuses.

Step S103: adding the DLNA apparatus to a DLNA list, where the DLNA list is correspondingly related to a shortcut icon.

The DLNA apparatus is added to the DLNA list. The DLNA list may be created by a lower-layer service component of the DLNA apparatus, and is correspondingly related to the shortcut icon. The shortcut icon is a quick-start program provided by the DLNA apparatus, and is equivalent to a shortcut to open the DLNA list. The user can enter the interface of the DLNA list by clicking the shortcut icon.

Step S104: displaying the shortcut icon at a predetermined position of a display interface.

The display interface is the home screen interface of the DLNA apparatus, and the predetermined position is a position on the home screen interface of the DLNA apparatus at which the shortcut icon corresponding to the DLNA list is displayed. It should be appreciated that, the predetermined position is not fixed, but may be an arbitrary position on the home screen interface of the DLNA apparatus; and when the shortcut icon is displayed at a certain position on the home screen interface of the DLNA apparatus, the certain position is just considered as the predetermined position. In this embodiment, if the DLNA apparatus has a pull-down menu bar, for example, if the DLNA apparatus is a mobile phone and a shortcut icon corresponding to the DLNA list is also provided in the pull-down menu bar of the mobile phone, it will become more convenient for the user to enter the DLNA list.

Step S105: entering the DLNA list by clicking the shortcut icon to select and operate the DLNA apparatus.

The user enters the DLNA list by clicking the shortcut icon, and then the DLNA apparatuses are listed out in the DLNA list so that the user can select and operate a corresponding DLNA apparatus depending on his or her own needs.

According to the above description, by accessing the DLNA network via the wireless mode to acquire a DLNA apparatus in the DLNA network, adding the DLNA apparatus to the DLNA list (where the DLNA list is correspondingly related to a shortcut list), displaying the shortcut icon at the predetermined position on the display interface, and entering the DLNA list by clicking the shortcut icon to select and operate the DLNA apparatus, the operation steps can be simplified in this embodiment. Because the user can directly enter the DLNA list in the display interface, it is convenient for the user to operate, and the operation efficiency of the user on the DLNA apparatus can be enhanced.

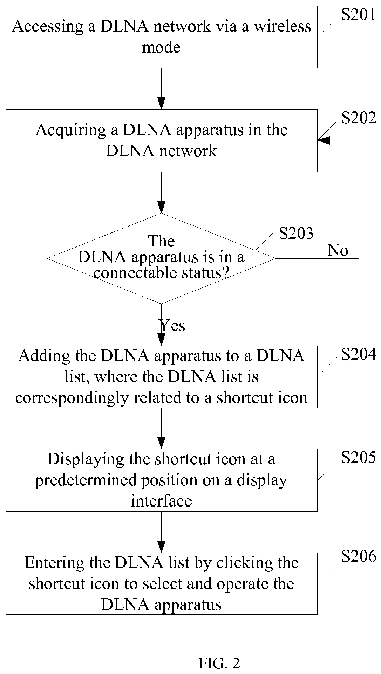

Refer to FIG. 2, which shows a schematic view illustrating the specific process flow of the method shown in FIG. 1. The specific process flow of the method comprises the following steps of:
Step S201: accessing a DLNA network via a wireless mode.

The DLNA network is also known as the home network. For example, if the electronic apparatus that sets up the DLNA network is a computer, then by setting the network type of the computer to be a "home network", the "home network" will be the DLNA network. In this embodiment, the DLNA network is a virtual network based on the 802.11 wireless network or wired network. The DLNA network labels the DLNA apparatuses that are connected into the DLNA network, and all DLNA apparatuses that are connected into the network can share resources and interoperate with each other. When electronic apparatuses that support the DLNA function in the household are connected into the DLNA network and it is ensured that the DLNA function of all electronic apparatuses that are connected into the DLNA network is activated, the electronic apparatuses can detect each other and establish communications therebetween.

Step S202: acquiring a DLNA apparatus in the DLNA network.

By using one of the DLNA apparatuses, the user can acquire other DLNA apparatuses in the DLNA network, and can conveniently control other DLNA apparatuses via the one DLAN apparatus.

Step S203: determining whether the DLNA apparatus is in a connectable status, and proceeding to step S204 if the DLNA apparatus is in a connectable status, or returning to step S202 if the DLNA apparatus is not in a connectable status.

Whether the DLNA apparatus is in a connectable status is determined. The connectable status is a DLNA network connectable status. If the DLNA apparatus is in the DLNA network connectable status, then connect the DLNA apparatus to the DLNA network and perform subsequent steps; and if the DLNA apparatus is not in the DLNA network connectable status, keep acquiring other DLNA apparatuses in the DLNA network until all DLNA apparatuses in the DLNA network are acquired.

Step S204: adding the DLNA apparatus to a DLNA list, where the DLNA list is correspondingly related to a shortcut icon.

The DLNA apparatus is added to the DLNA list. The DLNA list may be established by a lower-layer service component of the DLNA apparatus, and is correspondingly related to the shortcut icon. The user may enter the interface of the DLNA list by clicking the shortcut icon.

Step S205: displaying the shortcut icon at a predetermined position on a display interface.

The display interface is the home screen interface of the DLNA apparatus. The predetermined position is a position on the home screen interface of the DLNA apparatus at which the shortcut icon corresponding to the DLNA list is displayed. In this embodiment, if the DLNA apparatus has a pull-down menu bar, for example, if the DLNA apparatus is a mobile phone and a shortcut icon corresponding to the DLNA list is also provided in the pull-down menu bar of the mobile phone, it will become more convenient for the user to enter the DLNA list.

Step S206: entering the DLNA list by clicking the shortcut icon to select and operate the DLNA apparatus.

The user enters the DLNA list by clicking the shortcut icon, and then the DLNA apparatuses are listed out in the DLNA list so that the user can select and operate a corresponding DLNA apparatus depending on his or her own needs.

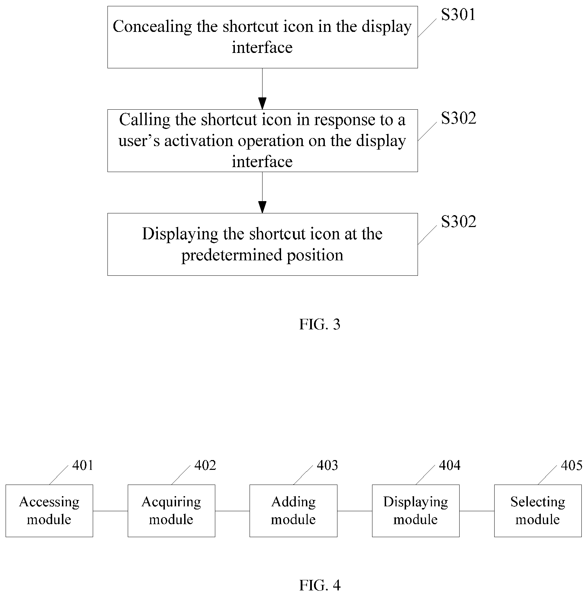

Refer to FIG. 3, which shows a schematic view illustrating the specific process flow of displaying a shortcut icon in the method shown in FIG. 1. Step S104 specifically comprises:
Step S301: concealing the shortcut icon in the display interface.

A time interval is preset in the DLNA apparatus. If the user has not clicked the shortcut icon during the time interval, that is, if the user has not executed any operation by using the shortcut icon during the time interval, the shortcut icon will be concealed in the display interface of the DLNA apparatus.

Step S302: calling the shortcut icon in response to a user's activation operation on the display interface.

The display interface is a touch interface, and the activation operation is a downward sliding action at a position on the home screen interface of the DLNA apparatus at which the shortcut icon is displayed, and then the DLNA apparatus to call the shortcut icon in response to the activation operation.

Step S303: displaying the shortcut icon at the predetermined position.

When the shortcut icon is called by the DLNA apparatus, the shortcut icon is displayed at the predetermined position so that the subsequent operation can be performed.

Refer to FIG. 4, which shows a schematic structural view illustrating a mobile terminal according to an embodiment of the present disclosure. The mobile terminal comprises an accessing module 401, an acquiring module 402, an adding module 403, a displaying module 404 and a selecting module 405. The mobile terminal may be a mobile phone, a notebook computer or a tablet computer, all of which belong to the DLNA apparatuses in the DLNA network.

The accessing module 401 is configured to access a DLNA network via a wireless mode. The DLNA network is also called the home network. In this embodiment, the DLNA network is a virtual network based on the 802.11 wireless network or wired network, and labels the DLNA apparatuses that are connected into the DLNA network. All DLNA apparatuses that are connected into the network can share resources and interoperate with each other. For example, if the electronic apparatus that sets up the DLNA network is a computer, the by setting the type of the wireless network of the computer to be a "home network", the "home network" will be the DLNA network. When electronic apparatuses that support the DLNA function in the household are connected into the DLNA network and it is ensured that the DLNA function of all electronic apparatuses that are connected into the DLNA network is activated, the electronic apparatuses can detect each other and establish communications therebetween.

The acquiring module 402 is configured to acquire a DLNA apparatus in the DLNA network. By use of one of the DLNA apparatuses, the user can acquire other DLNA apparatuses in the DLNA network to conveniently control other DLNA apparatuses via the one DLNA apparatus.

The adding module 403 is configured to add the DLNA apparatus to a DLNA list, where the DLNA list is correspondingly related to a shortcut icon. The DLNA apparatus is added to the DLNA list. The DLNA list is established by a lower-layer service component of the DLNA apparatus, and is correspondingly related to the shortcut icon. The user can enter the display interface of the DLNA list by clicking the shortcut icon.

The displaying module 404 is configured to display the shortcut icon at a predetermined position on a display interface.

The display interface is the home screen interface of the DLNA apparatus, and the home screen interface of the DLNA apparatus is a touch interface. The predetermined position is a position on the home screen interface of the DLNA apparatus at which the shortcut icon corresponding to the DLNA list is displayed. It should be appreciated that, the predetermined position is not fixed, and any position on the home screen interface of the DLNA apparatus can be set to be the predetermined position.

Further, a time interval may be preset in the DLNA apparatus. If the shortcut icon is not used by the user during the time interval, then the shortcut icon will be concealed.

The display interface is a touch interface, and the activation operation is a downward sliding action at a position on the home screen interface of the DLNA apparatus at which the shortcut icon is displayed, and then the DLNA apparatus calls the shortcut icon in response to the activation operation.

After the shortcut icon is called by the DLNA apparatus, the shortcut icon is displayed at the predetermined position so that subsequent operation can be performed.

The user enters the DLNA list by clicking the shortcut icon and operable DLNA apparatuses are listed out in the DLNA list so that the user can select and operate a corresponding DLNA apparatus depending on his or her own needs.

According to the above descriptions, the method of displaying a DLNA apparatus and a mobile terminal of the present disclosure allow the user to enter a DLNA list by clicking a shortcut icon on the display interface so as to select and operate the DLNA apparatus, which can simplify the operation steps; and because the user can directly enter the DLNA list in the display interface, it is more convenient for the user to operate and the operation efficiency of the user on the DLNA apparatus can be enhanced.

## Claims

1. A method of displaying a Digital Living Network Alliance, DLNA, apparatus, comprising the following steps of:
accessing a DLNA network via a wireless mode (S101);
acquiring a DLNA apparatus in the DLNA network (S102);
determining whether the DLNA apparatus is in a connectable status, and adding the DLNA apparatus to a single DLNA list if the DLNA apparatus is in a connectable status, or acquiring other DLNA apparatuses in the DLNA network if the DLNA apparatus is not in a connectable status (S203, S204, S202) until all DLNA apparatuses in the DLNA network are acquired; wherein the single DLNA list is correspondingly related to a shortcut icon, and the shortcut icon is a shortcut to open the single DLNA list (S103), wherein the single DLNA list lists all of the DLNA apparatus which are acquired;
displaying the shortcut icon at a predetermined position on a display interface (S104) after adding the DLNA apparatus to the single DLNA list; and concealing the shortcut icon if the shortcut icon is not operated during a preset time interval (S301); calling the shortcut icon in response to a user's activation operation on the display interface (S302); and displaying the shortcut icon at the predetermined position (S303), and
entering the single DLNA list by clicking the shortcut icon to select and operate the DLNA apparatus from the single DLNA list (S105).

2. The method of claim 1, wherein the display interface is a touch interface, and the activation operation is a downward sliding action from the predetermined position.

3. The method of claim 1, wherein the DLNA network is a wireless network or a wired network.

4. The method of claim 1, wherein the display interface is the home screen interface of the DLNA apparatus.

5. A mobile terminal, comprising an accessing module, an acquiring module, an adding module, a displaying module and a selecting module, wherein:
the accessing module (401) is configured to access a Digital Living Network Alliance, DLNA, network via a wireless mode;
the acquiring module (402) is configured to acquire a DLNA apparatus in the DLNA network;
the adding module (403) is configured to determine whether the DLNA apparatus is in a connectable status, and add the DLNA apparatus to a single DLNA list if the DLNA apparatus is in a connectable status, or acquire other DLNA apparatuses in the DLNA network if the DLNA apparatus is not in a connectable status until all DLNA apparatuses in the DLNA network are acquired; wherein the single DLNA list is correspondingly related to a shortcut icon, and the shortcut icon is a shortcut to open the single DLNA list, wherein the single DLNA list lists all of the DLNA apparatus which are acquired;
the displaying module (404) is configured to display the shortcut icon at a predetermined position on a display interface after the adding module (403) adds the DLNA apparatus to the single DLNA list; and conceal the shortcut icon in the display interface if the shortcut icon is not operated during a preset time interval; call the shortcut icon in response to a user's activation operation on the display interface; and display the shortcut icon at the predetermined position, and
the selecting module (405) is configured to enter the single DLNA list by clicking the shortcut icon to select and operate the DLNA apparatus from the single DLNA list.

6. The mobile terminal of claim 5, wherein the display interface is a touch interface, and the activation operation is a downward sliding action from the predetermined position.

7. The mobile terminal of claim 5, wherein the DLNA network is a wireless network or a wired network.

8. The mobile terminal of claim 5, wherein the display interface is the home screen interface of the DLNA apparatus.

## Patentansprüche

1. Verfahren zum Anzeigen eines Digital Living Network Alliance (DLNA)-Apparats, das die folgenden Schritte umfasst:
Zugreifen auf ein DLNA-Netzwerk über einen drahtlosen Modus (S101);
Erfassen eines DLNA-Apparats im DLNA-Netzwerk (S102);
Bestimmen, ob der DLNA-Apparat sich in einem anschließbaren Status befindet, und Hinzufügen des DLNA-Apparats zu einer einzigen DLNA-Liste, wenn der DLNA-Apparat sich in einem anschließbaren Status befindet, oder Erfassen anderer Apparate ins DLNA-Netzwerk, wenn der DLNA-Apparat sich nicht in einem anschließbaren Status befindet (S203, S204, S202) bis alle DLNA-Apparate im DLNA-Netzwerk erfasst sind; wobei die einzige DLNA-Liste entsprechend mit einem Verknüpfungssymbol verbunden ist, und das Verknüpfungssymbol eine Verknüpfung zur Öffnung der einzigen DLNA-Liste (S103) ist, wobei die einzige DLNA-Liste alle erfassten DLNA-Apparate auflistet;
Anzeigen des Verknüpfungssymbols an einem vorbestimmten Stelle auf einer Anzeigeschnittstelle (S104) nach der Hinzufügung des DLNA-Apparats zu der einzigen DLNA-Liste, und Verbergen des Verknüpfungssymbols, wenn das Verknüpfungssymbol während einer vorbestimmten Zeitspanne nicht betätigt wird (S301); Aufrufen des Verknüpfungssymbols als Reaktion auf einen Benutzerbetätigungsvorgang auf die Anzeigezwischenstelle (S302); und Anzeigen des Verknüpfungssymbols an der vorbestimmten Stelle (303), und
Eingeben der einzigen DLNA-Liste, indem das Verknüpfungssymbol zur Auswahl und Betätigung des DLNA-Apparats aus der einzigen DLNA-Liste angeklickt wird (S105).

2. Verfahren nach Anspruch 1, wobei die Anzeigezwischenstelle eine Touch-Schnittstelle ist, und der Betätigungsvorgang eine abwärtse Schiebung aus der vorbestimmten Stelle ist.

3. Verfahren nach Anspruch 1, wobei das DLNA-Netzwerk ein drahtloses Netzwerk ist oder ein verdrahtetes Netzwerk ist.

4. Verfahren nach Anspruch 1, wobei die Anzeigeschnittstelle eine Startbildschirmschnittstelle des DLNA-Apparats ist.

5. Mobiles Endgerät, das ein Zugriffsmodul, ein Erfassungsmodul, ein Hinzufügungsmodul, eine Anzeigemodul uns ein Auswahlmodul umfasst, wobei:
das Zugriffsmodul (401) zur Zugriff auf ein Digital Living Network Alliance (DLNA)-Netzwerk über einen drahtlosen Modus konfiguriert ist;
das Erfassungsmodul (402), das zur Erfassung eines DLNA-Apparats ins DLNA-Netzwerk konfiguriert ist;
das Hinzufügungsmodul (403) zur Bestimmung, ob der DLNA-Apparat sich in einem anschließbaren Status befindet, und zur Hinzufügung des DLNA-Apparats zu einer einzigen DLNA-Liste, wenn der DLNA-Apparat sich in einem anschließbaren Status befindet, oder zur Erfassung anderer Apparate ins DLNA-Netzwerk, wenn der DLNA-Apparat sich nicht in einem anschließbaren Status befindet bis alle DLNA-Apparate im DLNA-Netzwerk erfasst sind, konfiguriert ist; wobei die einzige DLNA-Liste entsprechend mit einem Verknüpfungssymbol verbunden ist, und das Verknüpfungssymbol eine Verknüpfung zur Öffnung der einzigen DLNA-Liste ist, wobei die einzige DLNA-Liste alle erfassten DLNA-Apparate auflistet;
das Anzeigemodul (404) zur Anzeige des Verknüpfungssymbols an einem vorbestimmten Stelle auf einer Anzeigeschnittstelle nachdem das Hinzufügungsmodul (403) den DLNA-Apparat zu der einzigen DLNA-Liste hinzugefügt hat, und zum Verbergen des Verknüpfungssymbols, wenn das Verknüpfungssymbol während einer vorbestimmten Zeitspanne nicht betätigt wird ; zum Aufruf des Verknüpfungssymbols als Reaktion auf einen Benutzerbetätigungsvorgang auf die Anzeigeschnittstelle; und zur Anzeige des Verknüpfungssymbols an der vorbestimmten Stelle konfiguriert ist, und
das Auswahlmodul (405) zur Eingabe der einzigen DLNA-Liste, indem das Verknüpfungssymbol zur Auswahl und Betätigung des DLNA-Apparats aus der einzigen DLNA-Liste angeklickt wird, konfiguriert ist.

6. Mobiles Endgerät nach Anspruch 5, wobei die Anzeigezwischenstelle eine Touch-Schnittstelle ist, und der Betätigungsvorgang eine abwärtse Schiebung aus der vorbestimmten Stelle ist.

7. Mobiles Endgerät nach Anspruch 5, wobei das DLNA-Netzwerk ein drahtloses Netzwerk ist oder ein verdrahtetes Netzwerk ist.

8. Mobiles Endgerät nach Anspruch 5, wobei die Anzeigeschnittstelle die Startbildschirmschnittstelle des DLNA-Apparats ist.

## Revendications

1. Procédé d'affichage d'un appareil répondant à la norme Digital Living Network Alliance, DLNA, comprenant les étapes suivantes:
accéder au réseau DLNA par l'intermédiaire d'un mode sans fil (S101);
acquérir un appareil DLNA dans le réseau DLNA (S102);
déterminer si l'appareil DLNA se trouve dans un état où il peut être connecté, et ajouter l'appareil DLNA à une liste unique DNLA si l'appareil DLNA se trouve dans un état où il peut être connecté, ou acquérir d'autres appareils DLNA dans le réseau DLNA si l'appareil DLNA ne se trouve pas dans un état où il peut être connecté (S203, S204, S202) jusqu'à ce que tous les appareils DLNA dans le réseau DLNA sont acquis; où la liste unique DLNA se rapporte de façon correspondante à une icône de raccourci, et l'icône de raccourci est un raccourci apte à ouvrir la liste unique DNLA (S103), où la liste unique DNLA liste tous les appareils DLNA acquis;
afficher l'icône de raccourci à une position prédéterminée sur une interface d'affichage (S104) après l'ajout de l'appareil DLNA à la liste unique DLNA; et
cacher l'icône de raccourci si l'icône de raccourci n'est pas actionnée pendant un intervalle de temps préétabli (S301); appeler l'icône de raccourci en réponse à une opération d'activation d'un utilisateur sur l'interface d'affichage (S302); et afficher l'icône de raccourci à la position prédéterminée (S303), et
saisir la liste unique DNLA en cliquant sur l'icône de raccourci afin de sélectionner et de faire fonctionner l'appareil DLNA à partir de la liste unique DNLA (S105).

2. Procédé selon la revendication 1, dans lequel l'interface d'affichage est une interface tactile, et l'opération d'activation est une action de glissement vers le bas à partir de la position prédéterminée.

3. Procédé selon la revendication 1, dans lequel le réseau DNLA est un réseau sans fil ou un réseau câblé.

4. Procédé selon la revendication 1, dans lequel l'interface d'affichage est l'interface d'écran d'accueil de l'appareil DLNA.

5. Terminal mobile, comprenant un module d'accès, un module d'acquisition, un module d'ajout, un module d'affichage et module de sélection, dans lequel :
le module d'accès (401) est configuré pour accéder à un réseau répondant à la norme Digital Living Network Alliance, DLNA, par l'intermédiaire d'un mode sans fil;
le module d'acquisition (402) est configuré pour acquérir un appareil DLNA dans le réseau DLNA;
le module d'ajout (403) est configuré pour déterminer si l'appareil DLNA se trouve dans un état où il peut être connecté, et pour ajouter l'appareil DLNA à une liste unique DNLA si l'appareil DLNA se trouve dans un état où il peut être connecté, ou pour acquérir d'autres appareils DLNA dans le réseau DLNA si l'appareil DLNA ne se trouve pas dans un état où il peut être connecté jusqu'à ce que tous les appareils DLNA dans le réseau DLNA sont acquis; où la liste unique DLNA se rapporte de façon correspondante à une icône de raccourci, et l'icône de raccourci est un raccourci apte à ouvrir la liste unique DNLA, où la liste unique DNLA liste tous les appareils DLNA acquis;
le module d'affichage (404) est configuré pour afficher l'icône de raccourci à une position prédéterminée sur l'interface d'affichage après que le module d'ajout (403) a ajouté l'appareil DLNA à la liste unique DLNA; et
pour cacher l'icône de raccourci dans l'interface d'affichage si l'icône de raccourci n'est pas actionnée pendant un intervalle de temps préétabli; et pour appeler l'icône de raccourci en réponse à une opération d'activation d'un utilisateur sur l'interface d'affichage; et pour afficher l'icône de raccourci à la position prédéterminée, et
le module de sélection (405) est configuré pour saisir la liste unique DNLA en cliquant sur l'icône de raccourci afin de sélectionner et de faire fonctionner l'appareil DLNA à partir de la liste unique DNLA.

6. Terminal mobile selon la revendication 5, dans lequel l'interface d'affichage est une interface tactile, et l'opération d'activation est une action de glissement vers le bas à partir de la position prédéterminée.

7. Terminal mobile selon la revendication 5, dans lequel le réseau DNLA est un réseau sans fil ou un réseau câblé.

8. Terminal mobile selon la revendication 5, dans lequel l'interface d'affichage est l'interface d'écran d'accueil de l'appareil DLNA.
